# EUROPÄISCHE PATENTSCHRIFT

(11) **EP 3 521 773 B1**
(45) Veröffentlichungstag und Bekanntmachung des Hinweises auf die Patenterteilung: **29.09.2021**
(21) Anmeldenummer: 18155300.9
(22) Anmeldetag: 06.02.2018
(51) Int. Cl.: G01F 1/66

(54) **ULTRASCHALL-DURCHFLUSSMESSVORRICHTUNG UND VERFAHREN ZUM BESTIMMEN EINER STRÖMUNGSGESCHWINDIGKEIT**
ULTRASOUND FLOW METER AND METHOD OF DETERMINING A FLOW SPEED
DISPOSITIF ULTRASONORE DE MESURE D'ÉCOULEMENT ET PROCÉDÉ DE DÉTERMINATION D'UNE VITESSE D'ÉCOULEMENT

(43) Veröffentlichungstag der Anmeldung: 07.08.2019
(73) Patentinhaber: SICK Engineering GmbH, 01458 Ottendorf-Okrilla (DE)
(72) Erfinder: Nerowski, Alexander Dr., 01277 Dresden (DE); Kirmse, Henri, 01309 Dresden (DE); Oberländer, Martin, 01099 Dresden (DE)
(74) Vertreter: Hehl, Ulrich

(56) Entgegenhaltungen:
- EP-A1- 3 246 668
- EP-B1- 1 378 727
- DE-A1- 2 950 732
- US-A1- 2005 066 744
- US-A1- 2008 141 786
- US-A1- 2015 355 002
- US-A1- 2017 268 915

## Beschreibung

Die Erfindung betrifft eine Ultraschall-Durchflussmessvorrichtung und ein Verfahren zum Bestimmen der Strömungsgeschwindigkeit eines in einer Leitung strömenden Fluids nach dem Oberbegriff von Anspruch 1 beziehungsweise 14.

Ein bewährtes Verfahren zum Messen der Strömungsgeschwindigkeit oder des Durchflusses ist das Differenzlaufzeitverfahren. Dabei wird ein Paar Ultraschallwandler am Außenumfang der Rohrleitung mit einem gegenseitigen Versatz in Längsrichtung montiert, die quer zu der Strömung entlang des zwischen den Ultraschallwandlern aufgespannten Messpfades wechselseitig Ultraschallsignale aussenden und registrieren. Die durch das Fluid transportierten Ultraschallsignale werden je nach Laufrichtung durch die Strömung beschleunigt oder abgebremst. Die resultierende Laufzeitdifferenz wird mit geometrischen Größen zu einer mittleren Strömungsgeschwindigkeit des Fluids verrechnet. Mit der Querschnittsfläche ergibt sich daraus der Volumenstrom oder Durchfluss. Für genauere Messungen können auch mehrere Messpfade mit jeweils einem Paar Ultraschallwandler vorgesehen sein, um einen Strömungsquerschnitt genauer zu erfassen.

Die zur Erzeugung des Ultraschalls eingesetzten Ultraschallwandler weisen einen Schwingkörper auf, häufig eine Keramik. Mit dessen Hilfe wird beispielsweise auf Basis des piezoelektrischen Effekts ein elektrisches Signal in Ultraschall gewandelt und umgekehrt. Je nach Anwendung arbeitet der Ultraschallwandler als Schallquelle, Schalldetektor oder beides. Dabei muss für eine Kopplung zwischen dem Fluid und dem Ultraschallwandler gesorgt werden. Eine verbreitete Lösung besteht darin, die Ultraschallwandler mit direktem Kontakt zum Fluid in die Leitung hineinzuführen. Solche intrusiven Sonden können jedoch genaue Messungen durch Störung der Strömung erschweren. Umgekehrt sind die eintauchenden Ultraschallwandler dem Fluid und dessen Druck und Temperatur ausgesetzt und werden dadurch womöglich beschädigt, besonders im Falle korrosiv oder abrasiv wirkender Medien, oder sie verlieren durch Ablagerungen ihre Funktion.

Grundsätzlich sind auch Techniken mit einem komplett nicht-intrusiven Messgerät bekannt, bei denen die Innenwand vollständig geschlossen oder glatt bleibt. Ein Beispiel ist die sogenannte Clamp-On-Montage etwa gemäß US 4 467 659, mit der zwei keilförmige Ultraschallwandler von außen an der Leitung befestigt werden. Ein prinzipbedingter Nachteil ist dabei, dass durch die Richtwirkung der Keilwandler nur Messpfade realisiert werden können, welche die Rohrmittelachse durchqueren. Solche diametralen Messpfade sind oft aus strömungsmechanischer Sicht ungünstig, da sie bei Änderungen des Strömungsprofils etwa durch Vorstörungen zusätzliche Messfehler erzeugen.

Die US 2017/0268915 A1 offenbart eine Clamp-On-Ultraschalldurchflussmessvorrichtung, bei der zwei Ultraschallwandler in einer reflexiven Anordnung auf derselben Seite der Leitungswand angeordnet sind. Es wird sowohl das Fluidsignal als auch ein direkt durch die Leitung propagiertes Leitungssignal ausgewertet, um damit automatisch Eigenschaften der Leitung zu erfassen.

In der DE 29 50 732 A1 weist ein Ultraschal-Strömungsmesser zwei an der Rohrleitung auf Längsabstand voneinander angebrachte Wandlereinheiten auf. In einer Ausführungsform sind beide Wandler in einem einstückigen Gehäuse untergebracht, wobei die akustische Strecke im Gehäuse zwischen den beiden Wandlern festgelegt ist.

Die US 2015/0355002 A1 offenbart eine Clamp-On-Ultraschalldurchflussmessvorrichtung, in der zwei Ultraschallwandler mit der Leitung dazwischen gegenüber angeordnet sind. Der Einkopplungswinkel in die Leitungswand ist so gewählt, dass eine evaneszente Welle entsteht.

Die US 2005/0066744 A1 offenbart eine Ultraschall-Gasdurchflussmessvorrichtung mit zwei einander gegenüber angeordneten Wandlerpaaren. Dabei werden die Messwerte anhand von Parametern wie der Geometrie der Leitung oder der Temperatur von Leitung und Gas korrigiert. Es werden parasitäre Reflexionssignale durch Mehrfachreflexionen erwähnt.

Die EP 1 378 727 B1 schlägt vor, die Ultraschall erzeugenden Elemente an einer Außenseite einer Wandung anzubringen. Im Gegensatz zur Clamp-On-Technik wird dabei der Ultraschallwandler gleichsam in die Wandung integriert. In dem Bereich der Ultraschallwandler wird eine Tasche mit erheblich geringerer Wandstärke als die restliche Wandung geformt, und die verbleibende Wandstärke bildet die Membran des Ultraschallwandlers. Bei einer derartigen auch als Clamp-In bezeichneten Messweise sind nun die Ultraschwallwandler imstande, durch ihre fast einem Kugelstrahler entsprechende Abstrahlcharakteristik auch nicht-diametrale oder außermittige Pfade zu realisieren, sogenannte Sekantenpfade, wodurch eine erhöhte Robustheit gegenüber Vorstörungen der Strömung erreichbar ist. Auch die EP 3 246 668 A1 befasst sich mit einer Ultraschall-Messvorrichtung mit Clamp-In-Montage.

Konzeptbedingt wird dadurch allerdings auch die Rohrwand mit angeregt, so dass sich verschiedene Ausbreitungswege des Ultraschallsignals in Rohrwand und Fluid ergeben. Durch solche Überlagerungen kommt es zu Messfehlern im deutlich zweistelligen Prozentbereich. Die Absolutlaufzeit der überlagerten Schallanteile ist neben der Rohrgeometrie stark abhängig von der Schallgeschwindigkeit des Fluids und auch den Materialparametern der Rohrwand. Damit verursachen diese einen Messfehler, der äußerst sensitiv vor allem von der Schallgeschwindigkeit abhängt und sich nicht sinnvoll kalibrieren lässt.

Es ist daher Aufgabe der Erfindung, die Genauigkeit eines Ultraschall-Differenzlaufzeitverfahrens zu verbessern.

Diese Aufgabe wird durch eine Ultraschall-Durchflussmessvorrichtung und ein Verfahren zum Bestimmen der Strömungsgeschwindigkeit eines in einer Leitung strömenden Fluids nach Anspruch 1 beziehungsweise 14 gelöst. Zwei Ultraschallwandler spannen einen Messpfad durch das strömende Fluid auf und messen dessen Strömungsgeschwindigkeit mittels Differenzlaufzeitverfahren durch wechselseitig ausgesandte und empfangene Ultraschallpulse beziehungsweise Ultraschallpulspakete mit einer pulsförmigen Hüllkurve und einigen Perioden der Ultraschallfrequenz.

Die Erfindung geht nun von dem Grundgedanken aus, einen bestimmten Teilpuls in der Überlagerung verschiedener Schallanteile des jeweiligen Empfangssignals zeitlich zu isolieren. Das gelingt durch speziell angepasste Positionierung der Ultraschallwandler und damit des Messpfades. Der zeitlich isolierte oder separierte bestimmte Teilpuls kann nun unbeeinflusst von anderen Schallanteilen ausgewertet werden. Das ist selbstverständlich nur in technisch sinnvollem Rahmen möglich, auch der bestimmte Teilpuls hat seitliche Ausläufer, die sich möglicherweise noch mit anderen Ausläufern überlagern. Entscheidend ist, dass der bestimmte Teilpuls zeitlich lokalisiert werden kann und dabei Überlagerungen durch andere Schallanteile kaum noch und nach Möglichkeit praktisch keinen Messfehler beitragen.

Dabei wird angenommen, dass das Empfangssignal eine Überlagerung von Direktschall, Reflexionsschall, axial gebrochenem und azimutal gebrochenem Fluidschall ist. Hinzu kommen noch Struktur- oder Körperschallanteile mit Ausbreitungswegen vollständig in der Leitungswand, die auf andere Weise kompensierbar sind und hier nicht weiter betrachtet werden. Der Direktschall entspricht dem direkten Ausbreitungsweg zwischen den Ultraschallwandlern und damit dem Messpfad. Reflexionsschall ist ebenfalls unmittelbar in das Fluid abgestrahlter Schall, der jedoch erst nach mindestens einer Reflexion innen an der Leitungswand am gegenüberliegenden Ultraschallwandler ankommt. Die weiteren Anteile werden zusammenfassend als indirekter Fluidschall bezeichnet, weil sich hier die akustische Welle zunächst in der Leitungswand fortbewegt, dann in das Fluid einkoppelt und sich in dem Fluid zum empfangenden Ultraschallwandler bewegt. Erfindungsgemäß wird aus dieser Überlagerung durch besondere Anordnung der Ultraschallwandler ein bestimmter Teilpuls gewählt, der in dem Empfangssignal zeitlich isoliert wird.

Die Erfindung hat den Vorteil, dass durch erfindungsgemäße Anordnung der Ultraschallwandler der Einfluss von Überlagerungen insbesondere des indirekten Fluidschalls auf den bestimmten Teilpuls vernachlässigbar wird. Der bestimmte Teilpuls wird dadurch zeitlich von allen anderen Fluidschallanteilen getrennt, und es ist eine genaue Auswertung mit klassischen Methoden wie etwa der Hilbert-Transformation möglich. Der Störeinfluss durch Pulsüberlagerungen ist dabei eliminiert, weil im auszuwertenden Empfangssignalabschnitt des bestimmten Teilpulses keine Überlagerungen auftreten. Dies führt auch in jedem Fall zu besseren Messergebnissen als etwaige Algorithmen zur Pulsauftrennung oder sonstigen Filterung oder Korrektur von Einflüssen der Überlagerung, da gewisse Restfehler bei einem Algorithmus unvermeidbar sind und erfindungsgemäß bereits auf physischer Ebene das Eingangssignal die Fehlerquelle nicht mehr enthält.

Der bestimmte Teilpuls ist vorzugsweise der Direktpuls des Direktschalls auf dem Messpfad. Aus dem Direktpuls kann die Strömungsgeschwindigkeit am einfachsten gemessen werden, die sonstigen Überlagerungen und Teilpulse werden meist nur als Störung aufgefasst. Durch die erfindungsgemäße zeitliche Isolation aufgrund der Anordnung der Ultraschallwandler kann die Auswertung des Direktpulses von den Überlagerungen unbeeinflusst bleiben. Im Prinzip enthalten aber auch die anderen Teilpulse die Messinformation, da deren Ausbreitungswege reine Fluidpfade enthalten, die auch durch die insgesamt bekannte Geometrie bestimmbar sind. Eine derartige Auswertung wäre aber jedenfalls mühsamer und oft auch ungenauer als diejenige des Direktpulses.

Der Direktpuls ist vorzugsweise in dem Empfangssignal zuerst erfasst, und weitere Teilpulse folgen erst mit zeitlichem Mindestabstand. Die Auswertung des Direktpulses ist dann besonders einfach, indem eine Beschränkung auf den Anfangsbereich des Empfangssignals erfolgt. Die erfindungsgemäße Anordnung der Ultraschallwandler sorgt dafür, dass dieser Anfangsbereich mit dem Direktpuls noch nicht mit Signalanteilen anderer Schallanteile überlagert ist.

Der bestimmte Teilpuls weist bevorzugt in dem Empfangssignal mindestens zwei Perioden Abstand zu weiteren Teilpulsen auf. Das ist eine Quantifizierung der zeitlichen Isolation, die durch Anordnung der Ultraschallwandler erreichbar ist und für eine robuste Auswertung ohne Störeinflüsse durch Überlagerung auch ausreicht. Die Periode ist diejenige der Ultraschallfrequenz. Die zwei Perioden sind eine beispielhafte Untergrenze. Es kann auch eine schwächere zeitliche Isolation mit weniger als zwei Perioden genügen, während mehr als zwei Perioden, sofern umsetzbar, die Auswertung nur weiter verbessern können.

Die Leitungswand der Leitung weist bevorzugt Taschen auf, in denen nach innen ein dünnwandiger Bereich verbleibt, wobei die Ultraschallwandler in jeweils einer Tasche angeordnet sind und einen Schwingkörper aufweisen, der an dem dünnwandigen Bereich ankoppelt, der als schwingungsfähige Membran des Ultraschallwandlers wirkt. Damit wird die einleitend erläuterte Clamp-In-Montage umgesetzt, die auch Sekantenpfade ermöglicht. Hier passen die Annahmen an die Überlagerung der genannten Fluidschallanteile besonders gut. Alternativ wäre auch eine Clamp-On-Montage nicht ausgeschlossen, wo die Ultraschallwandler von außen an die Leitung angebracht sind. Das lässt aber weniger Freiheiten, die Ultraschallwandler anzuordnen, insbesondere sind nur diametrale Pfade möglich. Daher treten gewisse Schallanteile nicht auf oder verhalten sich anders, und es kann wesentlich erschwert und je nach Konstellation auch unmöglich werden, den bestimmten Teilpuls wie gewünscht zu isolieren.

Die Ultraschallwandler sind bevorzugt mit einem Sekantenwinkel von mindestens 22°, 27°, 32° oder 37° und/oder mit einem Sekantenwinkel von höchstens 38° angeordnet, wobei der Sekantenwinkel der in einem Querschnitt der Leitung gemessene Winkel des auf den Querschnitt projizierten Messpfades gegen den durch den ersten Ultraschallwandler verlaufenden Durchmesser der Leitung ist. Die Definition des Sekantenwinkels auf Basis des ersten Ultraschallwandlers erfolgt ohne Beschränkung der Allgemeinheit, da beide Ultraschallwandler durch die wechselseitige Messung ihre Rollen tauschen. Der Sekantenwinkel ist neben dem später eingeführten Axialabstand ein wichtiger möglicher Parameter, um die Anordnung von Ultraschallwandlern zu charakterisieren. Die genannten Unter- und Obergrenzen ergeben eine Vielzahl von vorteilhaften Intervallen.

Der Sekantenwinkel liegt vorzugsweise bei einer Nennweite der Leitung DN50 im Intervall [27°, 38°], zumindest [22°, 38°] oder jedenfalls [17°, 38°], bei einer Nennweite DN80 im Intervall [27°, 38°] oder zumindest [22°, 43°], bei einer Nennweite DN100 im Intervall [32°, 43°] oder zumindest [22°, 43°] und bei einer Nennweite DN150 im Intervall [37°, 43°], zumindest [32°, 43°] oder jedenfalls [22°, 43°]. Es gibt bestimmte Anforderungen an den Sekantenwinkel, die allgemein gelten, wie im vorigen Absatz durch Unter- und Obergrenzen angegeben. Eine gute Optimierung erfolgt aber nicht allgemein, sondern mit Rücksicht auf den Rohrdurchmesser und möglicherweise auch noch gewisse Materialparameter wie hier angegeben. Dabei ist das jeweils engste Intervall am besten geeignet, d.h. die geforderte Separation wird für ein besonders großes Schallgeschwindigkeitsfenster erzielt, die beiden größeren Intervalle schränken dann das Schallgeschwindigkeitsfenster zunehmend ein. Je weiter also das Intervall ist, desto besser passt es für verschiedene Geräte und Nennweiten, jedoch um den Preis engerer Annahmen an die konkrete Messsituation und speziell das Schallgeschwindigkeitsfenster.

Die Ultraschallwandler weisen bevorzugt einen Axialabstand von mindestens 12 mm, 27 mm, 37 mm, 42 mm oder 67 mm und/oder einen Axialabstand von höchstens 38 mm, 43 mm oder 73 mm auf, wobei der Axialabstand der Abstand zwischen den Ultraschallwandlern in Längsrichtung der Leitung ist. Dies ist der schon angesprochene zweite wichtige mögliche Parameter zur Charakterisierung einer erfindungsgemäßen Anordnung von Ultraschallwandlern. Wiederum ergeben die Unter- und Obergrenzen eine Vielzahl von vorteilhaften Intervallen. Allerdings sind hier nicht alle Kombinationen möglich, da einige sich ergebende Intervalle leer wären. Das liegt an der im Vergleich zu dem Sekantenwinkel veränderten Abhängigkeit von der Nennweite. Zwar sind einige der breiteren Intervalle für alle Nennweiten vorteilhaft, die optimalen Intervalle für manche Nennweiten schließen einander aber aus.

Der Axialabstand liegt bevorzugt bei einer Nennweite der Leitung DN50 im Intervall [27 mm, 38 mm], zumindest [12 mm, 43 mm] und bei einer Nennweite DN80, DN100 oder DN150 im Intervall [12 mm, 73 mm]. Sinngemäß gelten für die vorteilhaften Intervalle des Axialabstands die Ausführungen zum Sekantenwinkel. Allerdings lässt sich für größere Nennweiten DN80, DN100, DN150 ein gemeinsames Intervall des Axialabstands angeben, mit dem dann unabhängig von der Nennweite bereits ein großes Schallgeschwindigkeitsfenster abgedeckt ist.

Der Axialabstand beträgt vorzugsweise bei einer Nennweite der Leitung DN80 mindestens 42 mm, bei einer Nennweite DN100 mindestens 38 mm und bei einer Nennweite DN150 mindestens 62 mm oder mindestens 27 mm. Wie im vorigen Absatz ausgeführt, ist das Intervall [12 mm, 73 mm] für alle diese Nennweiten gemeinsam schon sehr gut geeignet. Durch individuelle Untergrenzen je nach Nennweite ist aber eine weitere Optimierung möglich, also ein noch größeres Schallgeschwindigkeitsfenster abgedeckt. Vorzugsweise sind die jeweiligen Bedingungen sowohl an Sekantenwinkel als auch an Axialabstand beide erfüllt. Es führt zu besonders guten Ergebnissen, wenn die jeweiligen Intervalle für Sekantenwinkel und Axialabstand bei einer bestimmten Nennweite kombiniert eingehalten werden. Nochmals bevorzugt werden jeweils die engsten, mittleren oder breitesten Intervalle miteinander kombiniert.

Die Leitung weist bevorzugt Stahl oder Aluminium auf, ist insbesondere daraus hergestellt ist. Die genannten Werte für Sekantenwinkel und Axialabstand sind für dieses Material besonders geeignet, führen also zu einer klaren zeitlichen Isolation des bestimmten Teilpulses, hier insbesondere des Direktpulses.

Das Produkt aus Wanddicke der Leitung und Frequenz des Ultraschalls liegt bevorzugt im Intervall [1400, 2800] mkHz. Das ist wie das Material Stahl oder Aluminium eine weitere Randbedingung, bei denen die genannten Werte für Sekantenwinkel und Axialabstand besonders vorteilhaft sind.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1a: eine schematische Längsschnittansicht einer Leitung zur Erläuterung des Differenzlaufzeitverfahrens zur Durchflussmessung mit Ultraschall;
- Fig. 1b: eine schematische Darstellung einer Leitungswand zur Erläuterung der Clamp-in-Montage eines Ultraschallwandlers;
- Fig. 2: eine dreidimensionale Ansicht eines Leitungsabschnitts zur Erläuterung der verschiedenen Ausbreitungswege des Ultraschalls; und
- Fig. 3a: eine dreidimensionale Skizze zur Einführung eines Koordinatensystems;
- Fig. 3b: eine Darstellung eines Rohrquerschnitts zur Definition von geometrischen Größen.

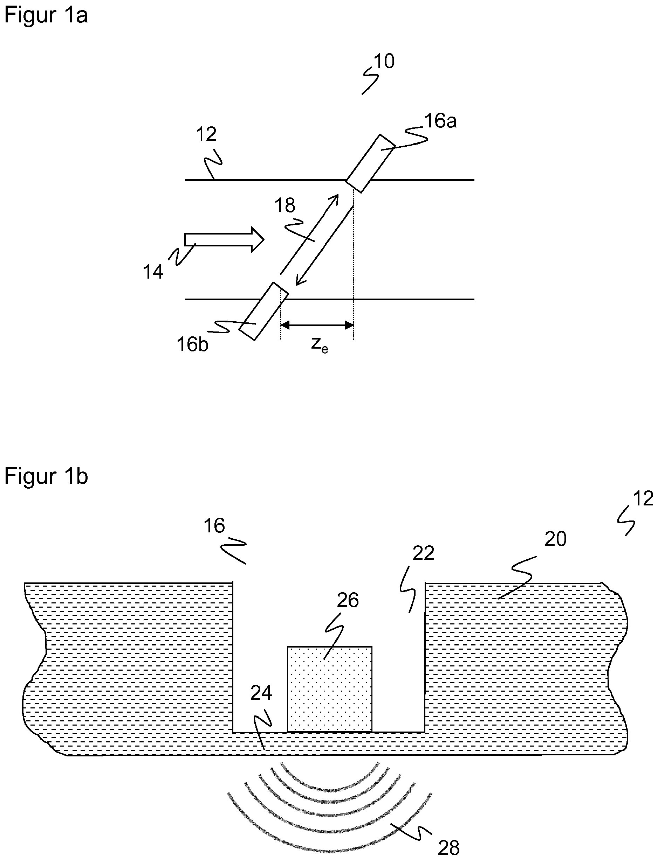

Figur 1a zeigt in einer Längsschnittansicht einen Ultraschall-Durchflussmesser 10 nach dem Differenzlaufzeitverfahren, der an einem Rohr beziehungsweise einer Leitung 12 montiert ist. Ein Fluid durchströmt die Leitung 12 in der durch den Pfeil 14 bezeichneten Richtung. Ein Paar Ultraschallwandler 16ab ist an einer Leitungswand angeordnet, um längs eines zwischen den Ultraschallwandlern 16ab aufgespannten Messpfades 18 ein Ultraschallsignal wahlweise in der einen oder der anderen Richtung auszusenden und zu empfangen.

Die beiden Ultraschallwandler 16ab sind in Längsrichtung der Leitung 12 gegeneinander versetzt, wobei zₑ den entsprechenden axialen Abstand bezeichnet. Dadurch bewegt sich der Fluidschall in der einen Richtung mit der Strömung und in der anderen Richtung gegen die Strömung. Daraus ergibt sich eine Laufzeitdifferenz, aus der die Strömungsgeschwindigkeit des Fluids berechnet werden kann. Die bis hierher auch bekannte Auswertung erfolgt in einer nicht dargestellten Steuer- und Auswertungseinheit des Ultraschall-Durchflussmessers 10, die mit den Ultraschallwandlern 16ab verbunden ist.

Die Leitung 12 im Bereich der Ultraschallmessung bildet einen Messkörper des Ultraschall-Durchflussmessers 10. Die Darstellung ist so gewählt, als sei dieser Messkörper ein integraler Bestandteil der vorhandenen Leitung 12. Das ist prinzipiell möglich, in der Praxis wird aber der Ultraschall-Durchflussmesser 10 mit einem eigenen Messkörper hergestellt, der nach der Montage einen entsprechenden Abschnitt einer vorhandenen Leitung ersetzt und dazu beispielsweise an beiden Seiten mit Flanschverbindungen eingefügt wird.

Figur 1a zeigt nur einen Messpfad 18. Es sind auch Mehrpfadsysteme möglich, in denen zusätzliche Ultraschallwandler weitere Messpfade aufspannen, um die Strömung an mehreren Stellen und damit genauer zu erfassen. Darauf wird aber nicht weiter eingegangen, der Ultraschall-Durchflussmesser 10 wird stellvertretend an einem Messpfad beschrieben.

Figur 1b zeigt eine schematische Darstellung einer Leitungswand 20 der Leitung 12 zur Erläuterung der Clamp-in-Montage eines Ultraschallwandlers 16. Die Clamp-In-Montage macht in besonderem Maße Gebrauch von den erfindungsgemäßen Vorteilen, aber es ist alternativ auch eine Clamp-On-Montage nicht ausgeschlossen.

Bei der Clamp-In-Montage wird in der Leitungswand 20 ein Hohlraum oder eine Tasche 22 ausgebildet. Nach innen hin verbleibt im Bereich der Tasche 22 von der Leitungswand 20 ein dünnwandiger Teilbereich 24, der zugleich als Membran des Ultraschallwandlers 16 dient und von dessen Schwingkörper 26, beispielsweise einer Piezokeramik, zum Schwingen angeregt wird, um ein Ultraschallsignal auszusenden, beziehungsweise es wird umgekehrt bei Auftreffen eines Ultraschallsignals aus dem Inneren der Leitung 12 auf den Teilbereich 24 der Schwingkörper 26 zum Schwingen angeregt. Vereinfachend ist in Figur 1b von dem Ultraschallwandler 16 nur der Schwingkörper 26 gezeigt. Der dünnwandige Teilbereich 24 bleibt stabil genug, um einem zu erwartenden Leitungsinnendruck standzuhalten. Die Leitungswand 20 bildet eine in sich geschlossene Innenfläche ohne Vertiefungen oder Vorsprünge, welche die Strömung stören oder an welchen sich Ablagerungen absetzen könnten.

Wie durch Schallausbreitungslinien 28 angedeutet, ist die Abstrahl- beziehungsweise Einstrahlrichtung der Ultraschallwandler 16 senkrecht zu einer Mittenachse der Leitung 12. Um dennoch einen axialen Versatz und damit einen Messeffekt bei einem Laufzeitdifferenzverfahren zu erzielen, ist eine relativ breite Abstrahlcharakteristik vorgesehen. Alternativ ist vorstellbar, den Ultraschallwandler 16 schräg anzuordnen, wobei dies aber konstruktiv aufwändiger ist und womöglich auch Modifikationen der Leitungswand 20 erfordert, die sich auch auf die Strömung auswirken.

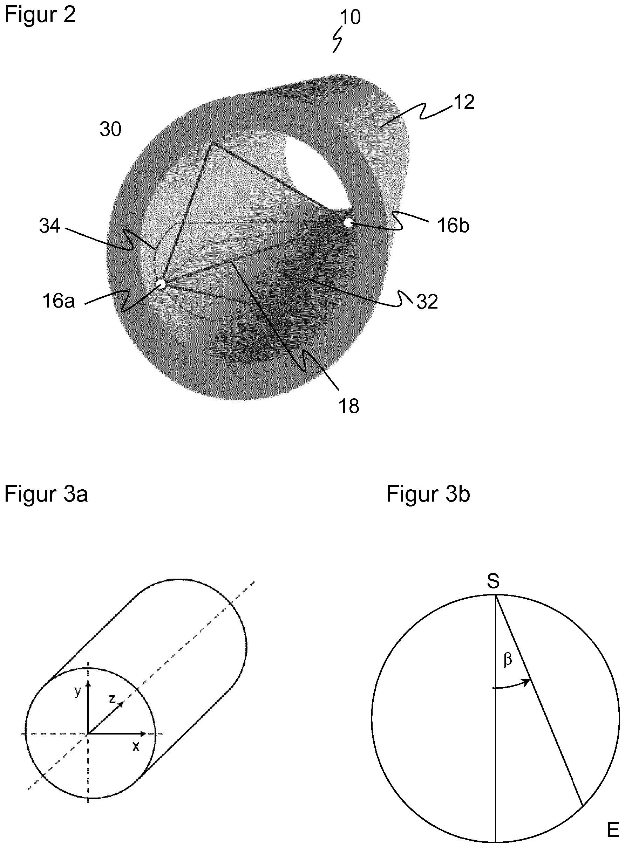

Figur 2 ist eine perspektivische Darstellung eines Leitungswandabschnitts mit der Ultraschall-Durchflussmessvorrichtung 10, um die möglichen Ausbreitungswege des Ultraschalls von dem sendenden Ultraschallwandler 16a zu dem empfangenden Ultraschallwandler 16b zu illustrieren. Dabei sei daran erinnert, dass die Ultraschallwandler 16a-b nur in einer Momentaufnahme als Sender und Empfänger festgelegt sind, da sie für eine Differenzlaufzeitmessung ihre Rollen tauschen.

Es gibt zwei reine Fluidsignale, nämlich einen Direktpuls auf dem Messpfad 18, der den direkten Weg zwischen den Ultraschallwandlern 16a-b darstellt, sowie Reflexionen 30 auf indirekten Wegen nach einer Reflexion an der Innenseite der Leitungswand 20. Hinzu tritt indirekter Fluidschall, der sich zunächst in der Leitungswand 20 ausbreitet und dann in das Fluid austritt und gerade zu dem empfangenden Ultraschallwandler 16b läuft. Der indirekte Fluidschall wird in einen axial gebrochenen indirekten Fluidschall 32, der zunächst geradlinig in der Leitung 12 auf einer Projektion des Messpfades 18 verläuft, und einen azimutal gebrochenen indirekten Fluidschall 34 unterschieden, der zunächst in der Leitung 12 verläuft. Hinzu kommt noch Strukturschall mit Ausbreitungswegen nur in der Leitungswand 20, die hier nicht diskutiert werden, da sie anderweitig kompensierbar sind, oder dadurch erzeugte Fehler werden hingenommen.

Das Ziel ist nun, durch geometrische Auslegung beziehungsweise durch Anordnung der Ultraschallwandler 16a-b einen beliebigen Puls der verschiedenen Schallanteile, insbesondere den Direktpuls, zeitlich derart zu isolieren, dass über einen breiten Schallgeschwindigkeitsbereich des Fluids mit möglichst einigen Perioden Abstand kein weiterer Puls am Empfänger eintrifft und der gewählte Puls somit frei von Störeinflüssen ist. Die Periodendauer bezieht sich auf die Ultraschallfrequenz und beträgt beispielsweise etwa 1,4 µs.

Figur 3a illustriert ein dreidimensionales Koordinatensystem in der Leitung 12. Figur 3b zeigt einen Querschnitt der Leitung 12. Die Anordnung der Ultraschallwandler 16a-b ist durch den Sekantenwinkel β, um den die direkte Verbindungslinie oder der Messpfad zwischen Empfänger E und Sender S gegen den von dem Sender S ausgehenden Durchmesser verkippt ist, sowie den gegenseitigen Axialabstand in Längsrichtung der Leitung 12 oder Z-Richtung beschreibbar.

Nachfolgend werden als Parameter für die Charakterisierung der Anordnung von Ultraschallwandlern 16a-b der Axialabstand *z*ₑ und der Sekantenwinkel β verwendet. Der Axialabstand *z*ₑ ist bereits in Figur 1 dargestellt und bezeichnet den Abstand der Ultraschallwandler 16a-b in Längsrichtung der Leitung 12, in dem Koordinatensystem der Figur 3a in Z-Richtung. Der Sekantenwinkel misst den Winkelversatz gegenüber einem Durchmesser der Leitung 12, wie in Figur 3b dargestellt.

Es bestehen weitere Abhängigkeiten von Materialparametern Dichte, E-Modul und Querkontraktionszahl sowie der Leitungswanddicke. Hier wird als Material Stahl oder Aluminium angenommen, und als repräsentativer Wert für die so noch nicht festgelegten Rahmenbedingungen der Wert Wanddicke*Frequenz des Ultraschalls vorgegeben. Auch bei Abweichungen von diesen Rahmenbedingungen sind die Anordnungen noch geeignet, aber ein gewisser Fehler kann durch solche Abweichungen hinzugefügt werden.

Um den Direktpuls gut auswerten zu können, werden mindestens zwei Perioden Abstand zum folgenden Puls gefordert. Die geometrischen Parameter der Anordnung der Ultraschallwandler 16a-b wurden dahingehend bewertet, wie groß das Schallgeschwindigkeitsfenster des Fluids ist, in dem diese Bedingung an die zeitliche Isolierung des Pulses erfüllt wird. Dabei werden Schallgeschwindigkeiten von 800 m/s bis 2000 m/s betrachtet, im optimalen Zustand ist das Schallgeschwindigkeitsfenster also 1200 m/s groß.

Gesucht sind geeignete Intervalle für die Parameter Axialabstand *z*ₑ und Sekantenwinkel β. Obwohl eine gewisse allgemeine Optimierung möglich ist, werden die besten Ergebnisse individuell für bestimmte Nennweiten erzielt. Dabei ist ein Gütemaß die Breite des Schallgeschwindigkeitsfensters mit ausreichender zeitlicher Isolierung des Pulses. Je nach Nennweite wird die Güte wie folgt festgelegt (die angegebenen Schallgeschwindigkeiten sind Breiten des Schallgeschwindigkeitsfensters im Vergleich zu den überhaupt nur möglichen 1200 m/s):
DN50: 900-1000 m/s: optimal, 700-800 m/s: sehr gut, 500-600 m/s: gut,
DN80-DN100: 1100-1200 m/s: optimal, 900-1000 m/s: sehr gut, 700-800 m/s: gut,
DN150: 1100 m/s: optimal, 900-1000 m/s: sehr gut, 700-800 m/s: gut.

Es ergeben sich dann die in den folgenden Tabellen dargestellten geometrischen Merkmale für Stahl und Aluminium als Leitungsmaterial:

**Tabelle 1: DN50**

| **Wanddicke · Frequenz [m·kHz]** | **Sekantenwinkel [°]** | **Axialabstand [mm]** | **Ausprägung** |
|---|---|---|---|
| 1400 ≤ *f·d* < 2800 | 27 ≤ *β* ≤ 38 | 27 mm ≤ *z*ₑ ≤ 38 mm | optimal |
| 1400 ≤ *f·d* < 2800 | 22 ≤ *β* ≤ 38 | 12 mm ≤ *z*ₑ ≤ 43 mm | sehr gut |
| 1400 ≤ *f·d* < 2800 | 17 ≤ *β* ≤ 38 | 12 mm ≤ *z*ₑ ≤ 43 mm | gut |

**Tabelle 2: DN80**

| **Wanddicke · Frequenz [m·kHz]** | **Sekantenwinkel [°]** | **Axialabstand [mm]** | **Ausprägung** |
|---|---|---|---|
| 1400 ≤ *f*·*d* < 2800 | 27 ≤ *β* ≤ 38 | 42 mm ≤ *z*ₑ ≤ 73 mm | optimal |
| 1400 ≤ *f*·*d* < 2800 | 22 ≤ *β* ≤ 43 | 12 mm ≤ *z*ₑ ≤ 73 mm | sehr gut |
| 1400 ≤ *f*·*d* < 2800 | 17 ≤ *β* ≤ 43 | 12 mm ≤ *z*ₑ ≤ 73 mm | gut |

**Tabelle 3: DN100**

| **Wanddicke · Frequenz [m·kHz]** | **Sekantenwinkel [°]** | **Axialabstand [mm]** | **Ausprägung** |
|---|---|---|---|
| 1400 ≤ *f*·*d* < 2800 | 32 ≤ *β* ≤ 43 | 37 mm ≤ *z*ₑ ≤ 73 mm | optimal |
| 1400 ≤ *f*·*d* < 2800 | 22 ≤ *β* ≤ 43 | 12 mm ≤ *z*ₑ ≤ 73 mm | sehr gut |
| 1400 ≤ *f*·*d* < 2800 | 17 ≤ *β* ≤ 43 | 12 mm ≤ *z*ₑ ≤ 73 mm | gut |

**Tabelle 4: DN150**

| **Wanddicke · Frequenz [m·kHz]** | **Sekantenwinkel [°]** | **Axialabstand [mm]** | **Ausprägung** |
|---|---|---|---|
| 1800 ≤ *f*·*d* < 2800 | 37 ≤ *β* ≤ 43 | 62 mm ≤ *z*ₑ ≤ 73 mm | optimal |
| 1400 ≤ *f*·*d* < 2800 | 32 ≤ ß ≤ 43 | 27 mm ≤ *z*ₑ ≤ 73 mm | sehr gut |
| 1400 ≤ *f*·*d* < 2800 | 22 ≤ *β* ≤ 43 | 12 mm ≤ *z*ₑ ≤ 73 mm | gut |

Als Lesebeispiel ist bei einer Leitung mit Nennweite DN100 ein Schallgeschwindigkeitsfenster von 1100-1200 m/s Breite möglich ("optimal"), wenn man nach Tabelle 3 einen Sekantenwinkel 32° ≤ *β* ≤ 43° und einen Axialabstand 37 mm ≤ *z*ₑ ≤ 73 mm wählt, unter Beachtung der Rahmenbedingungen Wanddicke*Frequenz 1400 mkHz ≤ *f·d* < 2800 mkHz sowie Material Alumium/Stahl. Werden die Rahmenbedingungen nicht eingehalten, so erhöht sich der Messfehler beziehungsweise verkleinert sich das Schallgeschwindigkeitsfenster mit ausreichender Isolation des Pulses. Kleinere Sekantenwinkel und/oder Axialabstände verkleinern ebenfalls das Schallgeschwindigkeitsfenster, wobei nach Tabelle 3 bis zu einem Sekantenwinkel von höchstens 22° beziehungsweise 17° und einem Axialabstand von mindestens 12 mm eine Breite des Schallgeschwindigkeitsfensters von 900 m/s-1000 m/s ("sehr gut") beziehungsweise 700 m/s-800 m/s ("gut") gewahrt bleibt.

Die Tabellen beziehen sich auf den Fall, dass der Direktpuls als erster Puls im Empfangssignal isoliert wird. Alternativ können die Ultraschallwandler 16a-b auch so positioniert werden, dass mehrere, auch indirekt abgestrahlte Pulse oder Reflexionen, wie oben beschrieben, zeitlich voneinander getrennt sind.

## Patentansprüche

1. Ultraschall-Durchflussmessvorrichtung (10) mit einem Messkörper zum Bestimmen der Strömungsgeschwindigkeit eines in einer Leitung (12) strömenden Fluids mit mindestens einem Messpfad (18), an dem ein erster Ultraschallwandler (16a) und ein zweiter Ultraschallwandler (16b) einander gegenüberliegend mit dem strömenden Fluid dazwischen angeordnet sind, wobei der Messkörper nach der Montage einen entsprechenden Abschnitt der Leitung (12) ersetzt, sowie mit einer Auswertungseinheit, die dafür ausgebildet ist, die Strömungsgeschwindigkeit aus einer Laufzeitdifferenz von Ultraschallpulsen längs des Messpfades (18) in Richtung mit der Strömung (14) und gegen die Strömung (14) zu berechnen, wobei die Ultraschallwandler (16a-b) derart positioniert sind, dass in einem Empfangssignal des jeweils empfangenden Ultraschallwandlers (16a-b) ein bestimmter Teilpuls zeitlich isoliert ist, wobei der Teilpuls einem Direktschall, einem Reflexionsschall, einem indirekten, axial gebrochenen Fluidschall oder einem indirekten, azimutal gebrochenen Fluidschall entspricht, wobei der Direktschall dem direkten Ausbreitungsweg zwischen den Ultraschallwandlern (16a-b) entspricht, Reflexionsschall in das Fluid abgestrahlter Schall ist, der jedoch erst nach mindestens einer Reflexion innen an einer Leitungswand (20) der Leitung (12) am gegenüberliegenden Ultraschallwandler (16b-a) ankommt und sich bei indirektem Fluidschall die akustische Welle zunächst in der Leitungswand (20) fortbewegt, dann in das Fluid einkoppelt und sich in dem Fluid zu dem empfangenden Ultraschallwandler (16a-b) bewegt,
**dadurch gekennzeichnet,**
**dass** die Ultraschallwandler (16a-b) mit einem Sekantenwinkel (β) von mindestens 17° und höchstens 43° angeordnet sind, wobei der Sekantenwinkel (β) ein geometrischer Parameter für die Charakterisierung der Anordnung der Ultraschallwandler (16a-b) ist, nämlich der in einem Querschnitt der Leitung (12) gemessene Winkel des auf den Querschnitt projizierten Messpfades (18) gegen den durch den ersten Ultraschallwandler (16a) verlaufenden Durchmesser der Leitung (12).

2. Ultraschall-Durchflussmessvorrichtung (10) nach Anspruch 1,
wobei der bestimmte Teilpuls der Direktpuls des Direktschalls auf dem Messpfad (18) ist.

3. Ultraschall-Durchflussmessvorrichtung (10) nach Anspruch 2,
wobei der Direktpuls in dem Empfangssignal zuerst erfasst ist und weitere Teilpulse erst mit zeitlichem Mindestabstand folgen.

4. Ultraschall-Durchflussmessvorrichtung (10) nach einem der vorhergehenden Ansprüche,
wobei der bestimmte Teilpuls in dem Empfangssignal mindestens zwei Perioden Abstand zu weiteren Teilpulsen aufweist.

5. Ultraschall-Durchflussmessvorrichtung (10) nach einem der vorhergehenden Ansprüche,
wobei die Leitungswand (20) Taschen (22) aufweist, in denen nach innen ein dünnwandiger Bereich (24) verbleibt, wobei die Ultraschallwandler (16a-b) in jeweils einer Tasche (22) angeordnet sind und einen Schwingkörper (26) aufweisen, der an dem dünnwandigen Bereich (24) ankoppelt, der als schwingungsfähige Membran des Ultraschallwandlers (16) wirkt.

6. Ultraschall-Durchflussmessvorrichtung (10) nach einem der vorhergehenden Ansprüche,
wobei die Ultraschallwandler (16a-b) mit einem Sekantenwinkel (β) von mindestens 22°, 27°, 32° oder 37° und/oder mit einem Sekantenwinkel (β) von höchstens 38° angeordnet sind, wobei der Sekantenwinkel (β) der in einem Querschnitt der Leitung (12) gemessene Winkel des auf den Querschnitt projizierten Messpfades (189) gegen den durch den ersten Ultraschallwandler (16a) verlaufenden Durchmesser der Leitung (12) ist.

7. Ultraschall-Durchflussmessvorrichtung (10) nach Anspruch 6,
wobei der Sekantenwinkel (β) bei einer Nennweite der Leitung (12) DN50 im Intervall [27°, 38°], zumindest [22°, 38°] oder jedenfalls [17°, 38°], bei einer Nennweite DN80 im Intervall [27°, 38°] oder zumindest [22°, 43°], bei einer Nennweite DN100 im Intervall [32°, 43°] oder zumindest [22°, 43°] und bei einer Nennweite DN150 im Intervall [37°, 43°], zumindest [32°, 43°] oder jedenfalls [22°, 43°] liegt.

8. Ultraschall-Durchflussmessvorrichtung (10) nach einem der vorhergehenden Ansprüche,
wobei die Ultraschallwandler (16a-b) einen Axialabstand (*z*ₑ) von mindestens 12 mm, 27 mm, 37 mm, 42 mm oder 67 mm und/oder einen Axialabstand (*z*ₑ) von höchstens 38 mm, 43 mm oder 73 mm aufweisen, wobei der Axialabstand (*z*ₑ) der Abstand zwischen den Ultraschallwandlern (16a-b) in Längsrichtung der Leitung (12) ist.

9. Ultraschall-Durchflussmessvorrichtung (10) nach Anspruch 8,
wobei der Axialabstand (*z*ₑ) bei einer Nennweite der Leitung (12) DN50 im Intervall [27 mm, 38 mm], zumindest [12 mm, 43 mm] und bei einer Nennweite DN80, DN100 oder DN150 im Intervall [12 mm, 73 mm] liegt.

10. Ultraschall-Durchflussmessvorrichtung (10) nach Anspruch 9,
wobei der Axialabstand (*z*ₑ) bei einer Nennweite der Leitung (12) DN80 mindestens 42 mm, bei einer Nennweite DN100 mindestens 38 mm und bei einer Nennweite DN150 mindestens 62 mm oder mindestens 27 mm beträgt.

11. Ultraschall-Durchflussmessvorrichtung (10) nach einem der Ansprüche 6 oder 7 und einem der Ansprüche 8 bis 10,
wobei die jeweiligen Bedingungen sowohl an Sekantenwinkel (β) als auch an Axialabstand (*z*ₑ) beide erfüllt sind.

12. Ultraschall-Durchflussmessvorrichtung (10) nach einem der vorhergehenden Ansprüche,
wobei die Leitung (12) Stahl oder Aluminium aufweist, insbesondere daraus hergestellt ist.

13. Ultraschall-Durchflussmessvorrichtung (10) nach einem der vorhergehenden Ansprüche,
wobei das Produkt aus Wanddicke der Leitung (12) und Frequenz des Ultraschalls im Intervall [1400, 2800] mkHz liegt.

14. Verfahren zum Bestimmen der Strömungsgeschwindigkeit eines in einer Leitung (12) strömenden Fluids, bei dem längs mindestens eines Messpfades (18), an dem ein erster Ultraschallwandler (16a) und ein zweiter Ultraschallwandler (16b) einander gegenüberliegend mit dem strömenden Fluid dazwischen angeordnet sind, wobei die Leitung (12) im Bereich der Ultraschallmessung einen Messkörper bildet, Ultraschallsignale in Richtung mit und gegen die Strömung (14) ausgesandt und empfangen werden und die Strömungsgeschwindigkeit aus einer Laufzeitdifferenz der Ultraschallsignale berechnet wird, wobei die Ultraschallwandler (16a-b) derart positioniert sind, dass in einem Empfangssignal des jeweils empfangenden Ultraschallwandlers (16a-b) ein bestimmter Teilpuls zeitlich isoliert ist und dass der bestimmte Teilpuls der Berechnung der Laufzeitdifferenz zugrunde gelegt wird, wobei der Teilpuls einem Direktschall, einem Reflexionsschall, einem axial gebrochenen Fluidschall oder einem azimutal gebrochenen Fluidschall entspricht, wobei der Direktschall dem direkten Ausbreitungsweg zwischen den Ultraschallwandlern (16a-b) entspricht, Reflexionsschall in das Fluid abgestrahlter Schall ist, der jedoch erst nach mindestens einer Reflexion innen an einer Leitungswand (20) der Leitung (12) am gegenüberliegenden Ultraschallwandler (16b-a) ankommt und sich bei indirektem Fluidschall die akustische Welle zunächst in der Leitungswand (20) fortbewegt, dann in das Fluid einkoppelt und sich in dem Fluid zu dem empfangenden Ultraschallwandler (16a-b) bewegt,
**dadurch gekennzeichnet,**
**dass** die Ultraschallwandler (16a-b) mit einem Sekantenwinkel (β) von mindestens 17° und höchstens 43° angeordnet sind, wobei der Sekantenwinkel (β) ein geometrischer Parameter für die Charakterisierung der Anordnung der Ultraschallwandler (16a-b) ist, nämlich der in einem Querschnitt der Leitung (12) gemessene Winkel des auf den Querschnitt projizierten Messpfades (18) gegen den durch den ersten Ultraschallwandler (16a) verlaufenden Durchmesser der Leitung (12).

15. Verfahren nach Anspruch 14,
wobei der bestimmte Teilpuls der zuerst empfangene Direktpuls des Direktschalls auf dem Messpfad (18) ist, dem weitere Teilpulse erst mit zeitlichem Mindestabstand folgen.

## Claims

1. An ultrasonic flow measurement device (10) comprising a measuring body for determining the flow velocity of a fluid flowing in a conduit (12), comprising at least one measuring path (18) where a first ultrasonic transducer (16a) and a second ultrasonic transducer (16b) are arranged opposite one another with the flowing fluid therebetween, the measuring body replacing a corresponding section of the conduit (12) after assembly, and comprising an evaluation unit configured to calculate the flow velocity from a time of flight difference of ultrasonic pulses along the measuring path (18) in the direction with the flow (14) and against the flow (14), wherein the ultrasonic transducers (16a-b) are positioned in such a way that in a received signal of the respective receiving ultrasonic transducer (16a-b) a certain partial pulse is isolated in time, wherein the partial pulse corresponds to a direct sound, a reflection sound, an indirect, axially refracted fluid sound or an indirect, azimuthally refracted fluid sound, wherein the direct sound corresponds to the direct propagation path between the ultrasonic transducers (16a-b), reflection sound is sound radiated into the fluid, which however arrives at the opposite ultrasonic transducer (16b-a) only after at least one internal reflection at a conduit wall (20) of the conduit (12), and in the case of indirect fluid sound the acoustic wave first travels in the conduit wall (20), then couples into the fluid and travels in the fluid to the receiving ultrasonic transducer (16a-b),
**characterized in that** the ultrasonic transducers (16a-b) are arranged with a secant angle (β) of at least 17° and at most 43°, the secant angle (β) being a geometric parameter for characterizing the arrangement of the ultrasonic transducers (16a-b), namely the angle, measured in a cross-section of the conduit (12), of the measurement path (18) projected onto the cross-section against the diameter of the conduit (12) passing through the first ultrasonic transducer (16a).

2. The ultrasonic flow measurement device (10) according to claim 1,
wherein the determined partial pulse is the direct pulse of direct sound on the measurement path (18).

3. The ultrasonic flow measurement device (10) according to claim 2,
wherein the direct pulse in the received signal is detected first and further partial pulses follow only after a minimum time distance.

4. The ultrasonic flow measurement device (10) according to any of the preceding claims,
wherein the determined partial pulse in the received signal is at least two periods apart from further partial pulses.

5. The ultrasonic measurement device (10) according to any of the preceding claims,
wherein the conduit wall (20) has pockets (22) in which an inner thin-walled region (24) remains, wherein the ultrasonic transducers (16a-b) are arranged in a respective pocket (22) and comprise a vibrating body (26) which couples to the thin-walled region (24) acting as a vibrating diaphragm of the ultrasonic transducer (16).

6. The ultrasonic flow measurement device (10) according to any of the preceding claims,
wherein the ultrasonic transducers (16a-b) are arranged with a secant angle (β) of at least 22°, 27°, 32° or 37° and/or with a secant angle (β) of at most 38°, wherein the secant angle (β) is the angle, measured in a cross-section of the conduit (12), of the measuring path (189) projected onto the cross-section against the diameter of the conduit (12) passing through the first ultrasonic transducer (16a).

7. The ultrasonic flow measurement device (10) according to claim 6,
wherein the secant angle (β) at a nominal diameter of the conduit (12) DN50 is in the interval [27°, 38°], at least [22°, 38°] or at least [17°, 38°], at a nominal diameter DN80 is in the interval [27°, 38°] or at least [22°, 43°], at a nominal diameter DN100 is in the interval [32°, 43°] or at least [22°, 43°] and at a nominal diameter DN150 is in the interval [37°, 43°], at least [32°, 43°] or at least [22°, 43°].

8. The ultrasonic flow measurement device (10) according to any of the preceding claims,
wherein the ultrasonic transducers (16a-b) have an axial distance (zₑ) of at least 12 mm, 27 mm, 37 mm, 42 mm or 67 mm and/or an axial distance (zₑ) of at most 38 mm, 43 mm or 73 mm, wherein the axial distance (zₑ) is the distance between the ultrasonic transducers (16a-b) in the longitudinal direction of the conduit (12).

9. The ultrasonic flow measurement device (10) according to claim 8,
wherein the axial distance (zₑ) is in the interval [27 mm, 38 mm], at least [12 mm, 43 mm] for a nominal diameter of the conduit (12) DN50 and in the interval [12 mm, 73 mm] for a nominal diameter DN80, DN100 or DN150.

10. The ultrasonic flow measurement device (10) according to claim 9,
wherein at a nominal diameter DN80 of the conduit (12) the axial distance (zₑ) is at least 42 mm, at a nominal diameter DN100 is at least 38 mm and at a nominal diameter DN150 is at least 62 mm or at least 27 mm.

11. The ultrasonic flow measurement device (10) according to claims 6 or 7 and any of claims 8 to 10,
wherein the respective conditions of secant angle (β) and axial distance (zₑ) are both satisfied.

12. The ultrasonic flow measurement device (10) according to any of the preceding claims,
wherein the conduit (12) comprises steel or aluminum, in particular is made thereof.

13. The ultrasonic flow measuring device (10) according to any of the preceding claims,
wherein the product of the wall thickness of the conduit (12) and the frequency of the ultrasound is in the interval [1400, 2800] mkHz.

14. A method for determining the flow velocity of a fluid flowing in a conduit (12),
wherein ultrasonic signals are transmitted and received along at least one measuring path (18) in the direction with and against the flow (14), a first ultrasonic transducer (16a) and a second ultrasonic transducer (16b) being arranged opposite one another at the measuring path (18) with the flowing fluid between them, the conduit (12) forming a measuring body in the region of the ultrasonic measurement, and the flow velocity being calculated from a time of flight difference of the ultrasonic signals, wherein the ultrasonic transducers (16a-b) are positioned in such a way that in a received signal of the respective receiving ultrasonic transducer (16a-b) a certain partial pulse is isolated in time and that the certain partial pulse is taken as a basis for the calculation of the time of flight difference, wherein the partial pulse corresponds to a direct sound, a reflection sound, an axially refracted fluid sound or an azimuthally refracted fluid sound, wherein the direct sound corresponds to the direct propagation path between the ultrasonic transducers (16a-b), reflection sound is sound radiated into the fluid, which, however, arrives at the opposite ultrasonic transducer (16ba) only after at least one internal reflection at a conduit wall (20) of the conduit (12) and, in the case of indirect fluid sound, the acoustic wave first travels in the conduit wall (20), then couples into the fluid and travels in the fluid to the receiving ultrasonic transducer (16a-b),
**characterized in that** the ultrasonic transducers (16a-b) are arranged with a secant angle (β) of at least 17° and at most 43°, the secant angle (β) being a geometric parameter for characterizing the arrangement of the ultrasonic transducers (16a-b), namely the angle, measured in a cross-section of the conduit (12), of the measurement path (18) projected onto the cross-section against the diameter of the conduit (12) passing through the first ultrasonic transducer (16a).

15. Method according to claim 14,
wherein the determined partial pulse is the first received direct pulse of the direct sound on the measurement path (18), which is followed by further partial pulses only after a minimum time distance.

## Revendications

1. Dispositif de mesure de débit par ultrasons (10) comportant un corps de mesure pour déterminer la vitesse d'écoulement d'un fluide s'écoulant dans une conduite (12) ayant au moins un trajet de mesure (18) sur lequel un premier transducteur à ultrasons (16a) et un deuxième transducteur à ultrasons (16b) sont disposés à l'opposé l'un de l'autre avec le fluide s'écoulant entre eux, le corps de mesure remplaçant une portion correspondante de la conduite (12) après le montage, et comportant une unité d'évaluation qui est réalisée pour calculer la vitesse d'écoulement à partir d'une différence de temps de parcours d'impulsions ultrasonores le long du trajet de mesure (18) dans le sens de l'écoulement (14) et à contre-courant de l'écoulement (14), dans lequel les transducteurs à ultrasons (16a-b) sont positionnés de telle sorte qu'une impulsion partielle déterminée est isolée dans le temps dans un signal de réception du transducteur à ultrasons (16a-b) respectivement récepteur, l'impulsion partielle correspond à un son direct, à un son réfléchi, à un son de fluide indirect réfracté axialement ou à un son de fluide indirect réfracté azimutalement, le son direct correspond au chemin de propagation direct entre les transducteurs à ultrasons (16a-b), le son réfléchi est le son rayonné dans le fluide, qui n'arrive toutefois au transducteur à ultrasons opposé (16b-a) qu'après au moins une réflexion à l'intérieur sur une paroi (20) de la conduite (12), et dans le cas du son de fluide indirect, l'onde acoustique se propage d'abord dans la paroi (20) de la conduite, puis se couple dans le fluide et se déplace dans le fluide jusqu'au transducteur à ultrasons récepteur (16a-b),
**caractérisé en ce que**
les transducteurs à ultrasons (16a-b) sont disposés selon un angle sécant (β) d'au moins 17° et d'au plus 43°, l'angle sécant (β) étant un paramètre géométrique permettant de caractériser la disposition des transducteurs à ultrasons (16a-b), à savoir l'angle, mesuré dans une section transversale de la conduite (12), du trajet de mesure (18) projeté sur la section transversale par rapport au diamètre de la conduite (12) passant par le premier transducteur à ultrasons (16a).

2. Dispositif de mesure de débit par ultrasons (10) selon la revendication 1,
dans lequel l'impulsion partielle déterminée est l'impulsion directe du son direct sur le trajet de mesure (18).

3. Dispositif de mesure de débit par ultrasons (10) selon la revendication 2,
dans lequel l'impulsion directe dans le signal de réception est détectée en premier, et d'autres impulsions partielles ne suivent qu'avec un intervalle de temps minimum.

4. Dispositif de mesure de débit par ultrasons (10) selon l'une des revendications précédentes,
dans lequel l'impulsion partielle déterminée dans le signal de réception est séparée d'au moins deux périodes d'autres impulsions partielles.

5. Dispositif de mesure de débit par ultrasons (10) selon l'une des revendications précédentes,
dans lequel une paroi (20) de la conduite présente des poches (22) dans lesquelles une région à paroi mince (24) reste vers l'intérieur, les transducteurs à ultrasons (16a-b) étant disposés dans une poche respective (22) et présentant un corps vibrant (26) qui se couple à la région à paroi mince (24) faisant office de membrane susceptible de vibrer du transducteur à ultrasons (16).

6. Dispositif de mesure de débit par ultrasons (10) selon l'une des revendications précédentes,
dans lequel les transducteurs à ultrasons (16a-b) sont disposés selon un angle sécant (β) d'au moins 22°, 27°, 32° ou 37° et/ou selon un angle sécant (β) d'au plus 38°, l'angle sécant (β) étant l'angle, mesuré dans une section transversale de la conduite (12), du trajet de mesure (189) projeté sur la section transversale par rapport au diamètre de la conduite (12) passant par le premier transducteur à ultrasons (16a).

7. Dispositif de mesure de débit par ultrasons (10) selon la revendication 6,
dans lequel l'angle sécant (β) est dans l'intervalle [27°, 38°], au moins [22°, 38°] ou en tout cas [17°, 38°] pour une largeur nominale de la conduite (12) DN50, dans l'intervalle [27°, 38°] ou au moins [22°, 43°] pour une largeur nominale DN80, dans l'intervalle [32°, 43°] ou au moins [22°, 43°] pour une largeur nominale DN100, et dans l'intervalle [37°, 43°], au moins [32°, 43°] ou en tout cas [22°, 43°] pour une largeur nominale DN150.

8. Dispositif de mesure de débit par ultrasons (10) selon l'une des revendications précédentes,
dans lequel les transducteurs à ultrasons (16a-b) ont une distance axiale (zₑ) d'au moins 12 mm, 27 mm, 37 mm, 42 mm ou 67 mm et/ou une distance axiale (zₑ) d'au plus 38 mm, 43 mm ou 73 mm, la distance axiale (zₑ) étant la distance entre les transducteurs à ultrasons (16a-b) dans la direction longitudinale de la conduite (12).

9. Dispositif de mesure de débit par ultrasons (10) selon la revendication 8,
dans lequel la distance axiale (zₑ) est dans l'intervalle [27 mm, 38 mm], au moins [12 mm, 43 mm] pour une largeur nominale de la conduite (12) DN50, et dans l'intervalle [12 mm, 73 mm] pour une largeur nominale DN80, DN100 ou DN150.

10. Dispositif de mesure de débit par ultrasons (10) selon la revendication 9,
dans lequel la distance axiale (zₑ) est d'au moins 42 mm pour une largeur nominale de la conduite (12) DN80, d'au moins 38 mm pour une largeur nominale DN100, et d'au moins 62 mm ou d'au moins 27 mm pour une largeur nominale DN150.

11. Dispositif de mesure de débit par ultrasons (10) selon l'une des revendications 6 ou 7 et l'une des revendications 8 à 10,
dans lequel les conditions respectives relatives à l'angle sécant (β) et à la distance axiale (zₑ) sont toutes deux satisfaites.

12. Dispositif de mesure de débit par ultrasons (10) selon l'une des revendications précédentes,
dans lequel la conduite (12) comprend de l'acier ou de l'aluminium, en particulier est réalisée de ceux-ci.

13. Dispositif de mesure de débit par ultrasons (10) selon l'une des revendications précédentes,
dans lequel le produit de l'épaisseur de paroi de la conduite (12) et de la fréquence des ultrasons est dans l'intervalle [1400, 2800] mkHz.

14. Procédé de détermination de la vitesse d'écoulement d'un fluide s'écoulant
dans une conduite (12), dans lequel des signaux ultrasonores sont émis et reçus dans le sens de l'écoulement (14) et à contre-courant de celui-ci le long d'au moins un trajet de mesure (18) sur duquel un premier transducteur à ultrasons (16a) et un deuxième transducteur à ultrasons (16b) sont disposés à l'opposé l'un de l'autre avec le fluide s'écoulant entre eux, la conduite (12) formant, au niveau de la mesure par ultrasons, un corps de mesure, et le trajet de mesure formant une ligne de liaison directe entre les transducteurs à ultrasons (16a-b), et la vitesse d'écoulement est calculée à partir d'une différence de temps de parcours des signaux ultrasonores,
dans lequel les transducteurs à ultrasons (16a-b) sont positionnés de telle sorte qu'une impulsion partielle déterminée est isolée dans le temps dans un signal de réception du transducteur à ultrasons (16a-b) respectivement récepteur, et que l'impulsion partielle déterminée est utilisée comme base pour le calcul de la différence de temps de parcours, l'impulsion partielle correspond à un son direct, à un son réfléchi, un à son de fluide réfracté axialement ou à un son de fluide réfracté azimutalement, le son direct correspond au chemin de propagation direct entre les transducteurs à ultrasons (16a-b), le son réfléchi est le son rayonné dans le fluide, qui n'arrive toutefois au transducteur à ultrasons opposé (16b-a) qu'après au moins une réflexion à l'intérieur sur une paroi (20) de la conduite (12), et dans le cas du son de fluide indirect, l'onde acoustique se propage d'abord dans la paroi (20) de la conduite, puis se couple dans le fluide et se déplace dans le fluide jusqu'au transducteur à ultrasons récepteur (16a-b), **caractérisé en ce que**
les transducteurs à ultrasons (16a-b) sont disposés selon un angle sécant (β) d'au moins 17°, l'angle sécant (β) étant un paramètre géométrique permettant de caractériser la disposition des transducteurs à ultrasons (16a-b), à savoir l'angle, mesuré dans une section transversale de la conduite (12), du trajet de mesure (18) projeté sur la section transversale par rapport au diamètre de la conduite (12) passant par le premier transducteur à ultrasons (16a).

15. Procédé selon la revendication 14,
dans lequel l'impulsion partielle déterminée est l'impulsion directe reçue en premier du son direct sur le trajet de mesure (18), qui n'est suivie d'autres impulsions partielles qu'avec un intervalle de temps minimum.
